# EUROPÄISCHE PATENTSCHRIFT

(11) **EP 2 114 465 B1**
(45) Veröffentlichungstag und Bekanntmachung des Hinweises auf die Patenterteilung: **20.02.2013**
(21) Anmeldenummer: 07856747.6
(22) Anmeldetag: 14.12.2007
(51) Int. Cl.: F16F 1/32, A23L 3/04

(54) **PASTEURISIERUNGSVORRICHTUNG MIT INTEGRIERTER WÄRMEPUMPE UND VERFAHREN HIERZU**
PASTEURIZING DEVICE, HAVING AN INTEGRATED HEAT PUMP, AND METHOD THEREOF
DISPOSITIF DE PASTEURISATION AVEC POMPE À CHALEUR INTÉGRÉE, ET PROCÉDÉ CORRESPONDANT

(30) Priorität: 26.01.2007 DE 102007003976
(43) Veröffentlichungstag der Anmeldung: 11.11.2009
(73) Patentinhaber: KHS GmbH, 44143 Dortmund (DE)
(72) Erfinder: MÜNZER, Jan, 25840 Friedrichstadt (DE)
(86) Internationale Anmeldenummer: PCT/EP2007/011009
(87) Internationale Veröffentlichungsnummer: WO 2008/089825

(56) Entgegenhaltungen:
- DE-A1- 10 351 689
- FR-A- 2 520 984
- US-A- 4 490 401

## Beschreibung

Die Erfindung betrifft eine Vorrichtung und ein Verfahren zum Pasteurisieren von flüssigkeltsgefollten Behältern, wie beispielsweise Getränkeflaschen oder Getränkedosen. Dabei wird ein Teil des Wärmeaustausches dadurch realisiert, dass zwischen einem oder mehreren Segmenten der Pasteurisierungszone und solchen der Abkühlzone eine Wärmepumpe vorgesehen ist.

Pasteurisierungsanlagen und -verfahren zur Haltbarmachung von Lebensmitteln in der Getränkeindustrie sind bekannt und In vielfachern Einsatz. Bei diesen Anlagen werden In einem bereiten Strom oder hintereinander Behälter, wie Flaschen, Dosen, Beutel oder dergleichen im Wesentlichen kontinuierlich durch eine Pasteurisierungsvorrichtung geleitet.

Diese Pasteurisierungsvorrichtungen und -verfahren sind derart aufgebaut, dass zur schonenden Erhitzung und Abkühlung die flüssigkeitsgefollten Behälter durch an- beziehungsweise absteigend temperierte Segmente gefördert werden. Zwischen der segmentierten Erwämungs- und Abkühlzone ist die Pasteurisierungszone angeordnet, die ebenfalls segmentiert sein kann, und in welcher die Temperatur im Wesentlichen auf einem geeignet hohen Niveau gehalten wird. Die DE 43 14 662 A1, DE 203 17 441 U1, DE 100 42 528 A1, DE199 08 035 A1 oder EP 0 430 907 B1 beschreiben derartige Pasteurisierungsvorrichtungen und -verfahren. Im Inneren der Vorrichtung werden die Behälter mit Flüssigkeit besprüht oder überschüttet, um die Erwärmung, Abkühlung oder den den isothermen Zustand zu realisieren.

Der Pasteurisierungsprozess beziehungsweise die Hygienisierung ist dabei im Wesentlichen von der Temperatur und der Verweilzeit abhängig. Da die Temperatur der geschlossenen Behälter nur begrenzt erhöht werden kann, muss die Verweilzeit verlängert werden, so dass die Pasteurisierungsvorrichtungen baulich sehr groß sind. Sie beinhalten im bestimmungsgemäßen Betrieb ein großes Flüssigkeltsvolumen mit einem einen hohen Energieinhalt. Es ist weiterhin bekannt, die Flüssigkeit der Segmente der Erwärmungs- und Abkühlzone in geeigneter Weise hin- und her zu leiten, um einen größtmöglichen Wärmerückgewinnung zu realisieren.

Das Problem einer idealen Verfahrensführung besteht nun darin, dass das bei einer gewünschten rekuperativen Abkühlung der pasteurisierten und gefüllten Behälter die Pasteurisierungsvorrichtungen baulich sehr groß sein müssen, wobei aber im idealfall nur eine etwas oberhalb der Temperatur des ersten Erwärmungssegmentes liegende Abkühltemperatur erreicht werden kann.

Eine Pasteurisiervorrichtung mit den Merkmalen des Oberbegriffs des Patentanspruchs 1 ist bekannt (FR 82 02148), wobei zur Einsparung von Energie eine Rückführung von Wärmeenergie aus der Abkühlzone über eine Wärmepumpe an die Pasteurisierzone erfolgt, Zur Einsparung von Energie und besseren Regelungsmöglichkeit ist weiterhin bekannt (DE 694 14 611 T2), die gefüllten Behälter in der Pasteurisierungszone im Regelbetrieb nicht zu überschütten und über eine geeignete Verschaltung und Verrieselung der Auffangflüssigkeit eine flexible und optimale Steuerung zu erreichen. Da der Energieeintrag in der Pasteurisierungszone im Normalbetrieb entfällt, ist anzunehmen, dass zur Errelchung einer identischen Haltbarmachung eine vergleichbare Energiemenge In der Erwärmungszone eingebracht werden muss, so dass sich die gesamte Vorrichtung baulich eher vergrößert.

In der DE 103 51 689 A1 wird vorgeschlagen, die Pasteurisierungsanlage mit der Abfüllanlage derart zu verschalten, dass die Behälterfüllung vorgewärmt wird und die verschlossenen Behälter mit leicht erhöhter Temperatur In den Pasteurisierungsprozess eintreten. Eine derartige Verschaltung ist bereits vorteilhaft, die Endtemperatur am Ausgang zu senken, allerdings ist die überführbare Wärmemenge begrenzt, da die abzufüllende Flüssigkeit stromaufwärts der Abfüllung nicht beliebig erhöht werden darf, unter anderem um starke Schaumbildung zu verhindern.

Die Aufgabe der Erfindung ist es somit eine baulich verbesserte Pasteurisisrungsvorrichtung zur Verfügung zu stellen, die wirtschaftlich und energetisch keine Nachteile gegenüber dem bekannten Stand der Technik aufweist.

Diese Aufgabe wird mittels der vorliegenden Erfindung erreicht. Diese betrifft eine Pasteurisierungsvorrichtung zur thermischen Behandlung von in verschlossenen Behältern vorliegenden Flüssigkeiten, die eine Erwärmungszone, eine Pasteurisierungszone und eine Abkühlungszone umfasst, wobei jede Zone aus einem oder mehreren Segmenten bestehen kann. Die gefüllten Flüssigkeitsbehälter werden Im bestimmungsgemäßen Betrieb durch alle Segmente vom Einlass der Pasteurisierungsvorrichtung zu deren Auslass gefördert, wobei zur Erwärmung, Pasteurisierung und/oder Abkühlung in den Segmenten Berieselungsvorrichtungen vorgesehen sind. Zur Wärmerückgewinnung wird die Berieselungsflüssigkeit eines oder mehrer Segmente In Auffangbehältern gesammelt und diese Flüssigkeiten zwischen einzelnen Segmenten zum Zwecke der Erwärmung oder Abkühlung in geeigneter Weise ausgetauscht. Die erfindungsgemäße Pasteurisierungsvorrichtung umfasst dabei eine Wärmepumpe, weiche mit einem Segment der Pasteurisierungszone und einem Segment der Abkühlzone über Leitungen und Förderaggregate derart verbunden ist, dass ein Teil der Wärmeenergie des Flüssigkeitsvolumens eines Segmentes der Abkühlzone, mittels dieser Wärmepumpe in ein Segment der Pasteurisierungszone überführbar ist.

Eine Ausgestaltung der Pasteurisierungsvorrichtung besteht darin, dass mit dem
a. Auffang behälter eines Pasteurisierungssegmentes ein Förderaggregat und eine Leitung verbunden sind, wobei die Leitung zur heißen Seite der Wärmepumpe führt, mit welcher sie in thermischem Kontakt steht, und diese Leitung von dort stromabwärts vor die Beriesetungsvorrictung eines Pasteurisierungssegmentes führt und mit dem
b. Auffangbehälter eines Abkühlsegmentes ein weiterer Förderaggregat und eine Leitung verbunden sind, wobei diese Leitung zur kalten Seite der Wärmepumpe führt, mit welcher sie in thermischem Kontakt steht, und diese Leitung von dort stromabwärts vor die Berieselungsvorrichtung eines Abkühlsegmentes führt.

Dabei ist unter der heißer Seite der Wärmepumpe diejenige Seite zu verstehen, die für die Wärmeabgabe, und unter kalter Seite diejenige Seite zu verstehen, die für die Wärmeaufnahme vorgesehen ist.

Dies direkt Erwärmung eines Teils des Verrieselungswassers stelle einen sehr effektiven Wärmeelntrag in das Pasteurisierungssegment dar, weil stromabwärts kein Wärmetauscher verwendet wird. Weiterhin ist die Regelung der Soll-Temperatur über die Mischung mit einer entsprechenden Menge an heißem Wasser einfach zu realisieren.

Einer Verbesserung besteht darin, stromaufwärts der Berieselungsvorrichtung eine Mischvorrichtung oder Mischstrecke vorgesehen ist, in welche neben der von der Wärmepumpe kommenden Leitung, auch eine Frischwasserleitung führt. Damit kann auch im Falle von z.B. schadensbedingten Unterbrechungen eine Überhitzung in der Pasteurisierungszone wirksam und auf sehr einfachem Wege verhindert werden verhindert werden. Es ist bei kleineren Störungen nicht einmal erforderlich die Leistung der Wärmepumpe zu drosseln oder den Kreislauf zeitweise abzuschalten.

Im Wesentlichen sind zwei Varianten der Verschaltung sinnvoll. Zum einen die, in welcher das über die Wärmepumpe und geeignete Leitungen verbundene Segment der Abkühlungszone ein Segment ist, weiches nicht rekuperativ mit einem Segment der Pasteurisierungszone verbunden ist. Zum anderen die Variante, in welcher das über die Wärmepumpe verbundene Segment der Abkühlungszone ein Segment ist, weiches rekuperativ mit einem Segment der Pasteurisierungszone verbunden ist. Natürlich sind auch Kombinationen denkbar oder Verfahrensführungen möglich, die temporäre klimatische Randbedingungen berücksichtigen. Eine derartige Ausführungsform könnte auch darin bestehen, dass mehr als ein Segment der Abkühlungszone über eine Wärmepumpe und geeignete Leitungen mit einem oder mehreren Segmenten der Pasteurisierungszone verbunden sind, wobei diese Segmente der Abkühlungszone rekuperativ verknüpfte Segmente oder Kühlsegmente ohne eine rekuperative Verknüpfung darstellen können.

Von der Erfindung ist auch ein Verfahren zur Pasteurisierung von flüssigen Medien umfasst, bei welchem eine Pasteurisierungsvorrichtung gemäß einem der vorstehend genannten Ausführungsformen eingesetzt wird. Eine optimierte Variante besteht darin, dass die Flüssigkeit, welche vom Wärmetauscher kommt und zu einen Pasteurisierungssegment strömt, maximal die Soll-Temperatur der Berieselungsflüssigkelt des jeweiligen Segmentes aufweist und idealerweise einen Temperatur aufweist, die 5° bis 15° unter dieser Soll-Temperatur liegt. Eine derartige Verfahrensvariante hat den Vorteil, dass die Wärmepumpe mit immer gleich bleibender Leistung kontinuierlich laufen kann und nur ein vergleichsweise kleiner Volumenstrom an heißem Wasser hinzugefügt werden muss. Dieser Volumenstrom wird als Kreislaufflüssigkeit dem Pasteurisierungssegment entnommen und in bekannter Art und Weise mittels externer Wärmetauscher erwärmt.

Eine Pasteurisierungsvorrichtung bekannter Bauart, mit der Eingangstemperatur von 12°C und einer Ausgangstemperatur von 31,8 °C von ehemals 15m Länge konnte durch den Einsatz einer Wärmepumpe um fast 3m verkürzt gebaut werden. Die Pasteurisierungsvorrichtung in der erfindungsgemäßen Bauform wies bei identischer Eingangstemperatur eine sogar niedrigere Ausgangstemperatur von 30,9°C auf. Dies konnte ohne eine Erhöhung der Betriebskosten für den Energiebedarf realisiert werden.

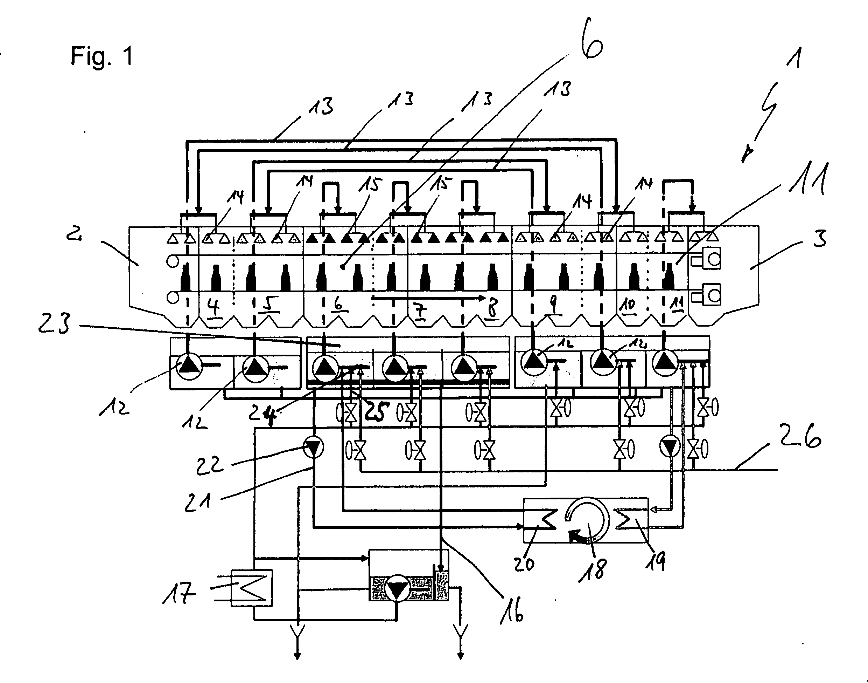

Anhand der Fig. 1 soll nachstehend beispielhaft eine Pasteurisierungsvorrichtung und eine Pasteurisierungsverfahren skizzenhaft beschriebenen werden.

Die schematische Darstellung der Fig. 1 zeigt die Pasteurisierungsvorrichtung 1, die einen Eingang 2, eine Ausgang 3 und eine Mehrzahl an Segmenten 4-11 aufweist. Von links nach rechts durchlaufen somit In den Eingang 2 geförderte und schematisch dargestellte Gefäße das Erwärmungssegment 4, Erwärmungssegment 5, Pasteurisierungssegmente 6, 7 und 8, Abkühlungssegment 9, Abkühlungssegment 10 und Kühlsegment 11. Die Segmente 4 und 10 sowie die Segmente 5 und 9 sind rekuperativ miteinander verbunden, in dem das aufgefangenen Berieselungswasser aufgefangen, mittels Pumpen 12 und über die Leitungen 13 zu dem jeweils anderen Segment gefördert und dort über geeignete und bekannter Berieselungsvorrichtungen 14 verrieselt wird. Das Berieselungswasser in den Pasteurisierungssegmenten 7 und 8 wird ebenfalls aufgefangen und als Innerer Kreislauf im selben Segment über die Berieselungsvorrichtungen 15 erneut verriegelt wird. Dazu wird ein Teilstrom 16 kontinuierlich entnommen und zur Erwärmung über einen Wärmetauscher 17 zur geleitet, und anschließend in den Pasteurisierungssegmenten 7 und 8 verrieselt.

In Fig.1 ist die Wärmepumpe 18 mit einer kalten Seite 19 und einer warmen Seite 20 zu erkennen. Über die Wärmepumpe 18 sind das Abkühlsegment 11 und das Pasteurisierungssegment 6 thermisch indirekt verbunden. Das im Kühlsegment 11 aufgefangene Wasser wird entnommen und zur kalten Seite 1 e der Warmepumpe 18 gefordert, wo ihm Energie entzogen wird, so dass kälteres Wasser in das Kühlsegment 11 zurückströmt und dort direkt verrieselt wird. Der so gewonnen und transferierbare Energieanteil wird auf der heißen Seite 20 der Wärmepumpe 18 an das Berieselungswasser abgegeben, welches über die Leitung 21 und Pumpe 22 aus dem Auffangbehälter 23 des Pasteurisierungssegmentes 6 entnommen wurde. In der Mischstrecke 24 wird das von der Wärmepumpe 18 kommende heiße Rücklaufwasser mit dem Teilstrom heißem Wasser aus Leitung 25 und einem Teilstrom kaltem Wasser aus Leitung 26 in geeigneter Weise gemischt.

### Bezugszelchenliste

- 1: Pasteurisierungsvorrichtung
- 2: Eingang
- 3: Ausgang
- 4: Kühlsegment
- 5: Kühlsegment
- 6: Pasteurisierungssegment
- 7: Pasteurisierungssegment
- 8: Pasteurisierungssegment
- 9: Abkühlsegment
- 10: Abkühlsegment
- 11: Kühlsegment
- 12: Pumpe
- 13: Leitung
- 14: Berieselungsvorrichtung
- 15: Berisselungsvorrichtung
- 16: Teilstrom
- 17: Wärmetauscher
- 18: Wärmepumpe
- 19: Kalte Seite der Wärmepumpe
- 20: Heize Seite der Wärmepumpe
- 21: Leitung
- 22: Pumpe
- 23: Auffangbehälter
- 24: Mischstrecke
- 25: Leitung
- 26: Leitung

## Patentansprüche

1. Pasteurisierungsvorrichtung zur thermischen Behandlung von In verschlossenen Behältern vorliegenden Flüssigkeiten, umfassend eine Erwärmungszone (4, 5), eine Pasteurisierungszone (6, 7, 8) und eine Abkühlungszone (9, 10, 11), wobei Jede Zone aus einem oder mehreren Segmenten bestehen kann, und die gefüllten Flüssigkeitsbehälter durch alle Segmente vom Einlass (2) der Pasteurisierungsvorrichtung zu deren Auslass (3) geleitet werden können und zur Erwärmung, Pasteurisierung und Abkühlung in den Segmenten Berieselungsvorrichtungen (14, 15) vorgesehen sind, wobei zur Wärmerückgewinnung die Berieselungsflüssigkeit eines oder mehrer Segmente in einem Auffangbehälter (23) gesammelt wird und diese Flüssigkeiten zwischen einzelnen Segmenten zum Zwecke der Erwärmung oder Abkühlung in geeigneter Weise ausgetauscht werden, wobei die Pasteurisierungsvorrichtung eine Wärmepumpe (18) umfasst, welche mit einem Segment (6) der Pasteurisierungszone und einem Segment (11) der Abkühlzone über Leitungen und Förderaggregate derart verbunden ist, dass ein Teil der Wärmeenergie des Flüssigkeitsvolumens eines Segmentes der Abkühlzone mittels dieser Wärmepumpe in ein Segment der Pasteurisierungszone rückführbar ist.
**dadurch gekennzeichnet,**
**dass** stromaufwärts der Berieselungsvorrichtunger (14, 15) der Pasteurisierungszone (6, 7, 8) eine Mischvorrichtung (24) vorgesehen ist, die zur Mischung des von der Wärmepumpe (18) kommenden heißen Rücklaufwassers mit einem Teilstrom heißem Wasser aus einer mit einem Wärmetauscher (17) in Verbindung stehenden Leitung (25) und mit einem Teilstrom kaltem Wasser aus einer Frischwasserleitung (26) ausgebildet ist.

2. Pasteurisierungsvorrichtung nach Anspruch 1, **dadurch gekennzeichnet, dass** mit dem
a) Auffangbehälter eines Pasteurisierungssegmentes ein Förderaggregat und eine Leitung verbunden sind, wobei die Leitung zur helßen Seite (20) der Wärmepumpe (18) führt, mit welcher sie In thermischem Kontakt steht, und diese Leitung von dort stromabwärts vor die Berieselungsvorrichtung (15) eines Pasteuriaierungesegmentes (7) führt und mit dem
b) Auffangbehälter eines Abkühlsegmentes ein weiterer Förderaggregat und eine Leitung verbunden sind, wobei diese leitung zur kalten Seite (19) der Wärmepumpe (18) führt, mit welcher sie in thermischem Kontakt steht, und diese Leitung von dort stromabwärts vor die Berieselungsvorrichtung eines Abkühlsegmentes (11) führt,
wobei unter heißer Seite (20) der Wärmepumpe (18) diejenige Seite verstanden werden soll, die für die Wärmeabgabe, und unter kalter Seite (19) diejenige Seite verstanden werden soll, die für die Wärmeaufnahme vorgesehen ist.

3. Pasteurisierungsvorrichtung nach einem der Ansprüche 1 bis 2, **dadurch gekennzeichnet, dass**
das über die Wärmepumpe (18) und geeignete Leitungen verbundene Segment (11) der Abkühlungszone ein Segment ist, welches nicht rekuperativ mit einem Segment (7) der Pasteurisierungszone verbunden ist.

4. Pasteurieierungsvorrichtung nach einem der Ansprüche 1 bis 2, **dadurch gekennzeichnet, dass**
das über die Wärmepumpe (18) verbundene Segment (11) der Abkühlungszone ein Segment ist, welches rekuperativ mit einem Segment der Pasteurisierungszone verbunden ist.

5. Pasteurisierungsvorrichtung nach einem der Ansprüche 1 bis 4, **dadurch gekennzeichnet, dass**
mehr als ein Segment der Abkühlungszone über die Wärmepumpe (18) und geelgnete Leitungen mit einem oder mehreren Segmenten der Erwärmungszone verbunden sind, wobei diese Segmente der Abkühlungszone rekuperativ verknüpfte Segmente sind.

6. Pasteurisierungsvorrichtung nach einem der Ansprüche 1 bis 4, **dadurch gekennzeichnet, dass**
mehr als ein Segment der Abkühlungszone über die Wärmepumpe (18) und geelgnete Leitungen mit einem oder mehreren Segmenten der Erwärmungszone verbunden sind, wobei diese Segmente Kühlsegmente ohne eine rekuperative Verknüpfung sind.

7. Verfahren zur Pasteurisierung von flüssigen Medien mittels eines Verfahrens, bei welchem eine Pasteurisienungsvorrichtung (1) gemäß einem der vorstehend genannten Ansprüche eingesetzt wird.

8. Verfahren nach Anspruch 7, **dadurch gekennzeichnet, dass** die Flüssigkeit, welche vom Wärmetauscher (17) kommt und zu einen Pasteurisierungssegment (7) strömt, maximal die Soll-Temperatur der Berieselungsflüssigkeit des jeweiligen Segmentes aufweist.

9. Verfahren nach Anspruch 8, **dadurch gekennzeichnet, dass** die Flüssigkeit, welche vom Wärmetauscher (17) kommt und zu einen Pasteurisierungssegment strömt, eine Temperatur aufweist, die 5° bis 15° unter dieser Soll-Temperatur liegt.

## Claims

1. Pasteurizing device for the thermal treatment of liquids present in closed containers, comprising a heating zone (4, 5), a pasteurization zone (6, 7, 8), and a cooling zone (9, 10, 11), wherein each zone may comprise one or more segments, and the filled liquid containers may be guided from the inlet (2) of the pasteurization device to the outlet thereof (3) through all segments, and irrigation devices (14, 15) are provided for the heating, pasteurization and cooling in the segments, wherein the irrigation liquid from one or more segments is collected in a collecting vessel (23) for the purpose of heat recovery, and these liquids are exchanged between individual segments for the purpose of heating or cooling in a suitable manner, wherein the pasteurization device comprises a heat pump (18) that is connected to a segment (6) of the pasteurization zone and a segment (11) of the cooling zone via lines and pumping units such that part of the thermal energy of the liquid volume of a segment of the cooling zone can be recovered in a segment of the pasteurization zone by means of this heat pump, **characterised in that** upstream of the irrigation devices (14, 15) of the pasteurization zone (6, 7, 8) is provided a mixing device (24) which is adapted to mix the hot return water coming from the heat pump (18) with a part flow of hot water from a line (25) in connection with a heat exchanger (17) and with a part flow of cold water from a fresh water line (26).

2. Pasteurizing device according to claim 1, **characterised in that**
a) a pumping unit and a line are connected with the collecting vessel of a pasteurizing segment, wherein the line leads to the hot side (20) of the heat pump (18) with which it is in thermal contact, and this line leads from there downstream before the irrigation device (15) of a pasteurizing segment (7), and
b) a further pumping unit and a line are connected with the collecting vessel of a cooling segment, wherein this line leads to the cold side (19) of the heat pump (18) with which it is in thermal contact, and this line leads from there downstream before the irrigation device (15) of a cooling segment (11), wherein the hot side (20) of the heat pump (18) is the side which is intended for heat output, and the cold side (19) is the side which is intended for heat absorption.

3. Pasteurizing device according to any one of claims 1 to 2, **characterised in that** the segment (11) of the cooling zone connected via the heat pump (18) and suitable lines is a segment which is not connected recuperatively with a segment (7) of the pasteurization zone.

4. Pasteurizing device according to any one of claims 1 to 2, **characterised in that** the segment (11) of the cooling zone connected via the heat pump (18) is a segment which is connected recuperatively with a segment of the pasteurization zone.

5. Pasteurizing device according to any one of claims 1 to 4, **characterised in that** more than one segment of the cooling zone is connected via the heat pump (18) and suitable lines with one or more segments of the heating zone, wherein these segments of the cooling zone are segments linked recuperatively.

6. Pasteurizing device according to any one of claims 1 to 4, **characterised in that** more than one segment of the cooling zone is connected via the heat pump (18) and suitable lines with one or more segments of the heating zone, wherein these segments are cooling segments without any recuperative link.

7. Method for pasteurizing liquid media by means of a method in which a pasteurizing device (1) according to any one of the preceding claims is used.

8. Method according to claim 7, **characterised in that** the liquid which comes from the heat exchanger (17) and flows to a pasteurizing segment (7) has as maximum the nominal temperature of the irrigation liquid of the respective segment.

9. Method according to claim 8, **characterised in that** the liquid which comes from the heat exchanger (17) and flows to a pasteurizing segment has a temperature which lies 5° to 15° below this nominal temperature.

## Revendications

1. Dispositif de pasteurisation servant au traitement thermique de liquides présents dans des récipients fermés, comprenant une zone de réchauffement (4, 5), une zone de pasteurisation (6, 7, 8) et une zone de refroidissement (9, 10, 11), sachant que chaque zone peut être constituée d'un ou de plusieurs segments et sachant que les récipients de liquide remplis peuvent être guidés à travers tous les segments de l'entrée (2) du dispositif de pasteurisation vers sa sortie (3), et sachant que des dispositifs de ruissellement (14, 15) sont prévus pour le réchauffement, la pasteurisation et le refroidissement dans les segments, sachant que le liquide de ruissellement d'un ou de plusieurs segments est recueilli dans un récipient collecteur (23) aux fins de l'extraction de chaleur et que ces liquides sont échangés de manière appropriée entre divers segments aux fins du réchauffement ou du refroidissement, sachant que le dispositif de pasteurisation comprend une pompe à chaleur (18) qui est reliée à un segment (6) de la zone de pasteurisation et à un segment (11) de la zone de refroidissement par l'intermédiaire de conduites et de groupes de refoulement de telle manière qu'une partie de l'énergie calorifique du volume de liquide d'un segment de la zone de refroidissement peut être renvoyée dans un segment de la zone de pasteurisation au moyen de ladite pompe à chaleur,
**caractérisé en ce**
**qu'**est prévu en amont des dispositifs de ruissellement (14, 15) de la zone de pasteurisation (6, 7, 8) un dispositif de mélange (24), lequel est réalisé pour mélanger l'eau de retour chaude en provenance de la pompe à chaleur (18) avec un flux partiel d'eau chaude en provenance d'une conduite (25) reliée à un échangeur de chaleur (17) et avec un flux partiel d'eau froide en provenance d'une conduite d'eau fraîche (26).

2. Dispositif de pasteurisation selon la revendication 1, **caractérisé en ce**
a) **qu'**un groupe de refoulement et une conduite sont reliés au récipient collecteur d'un segment de pasteurisation, sachant que la conduite mène vers le côté chaud (20) de la pompe à chaleur (18), avec laquelle elle se trouve en contact thermique, et sachant que ladite conduite mène de cet endroit dans une zone en aval avant le dispositif de ruissellement (15) d'un segment de pasteurisation (7),
b) **qu'**un autre groupe de refoulement et une conduite sont reliés au récipient collecteur d'un segment de refroidissement, sachant que ladite conduite mène vers un côté froid (19) de la pompe à chaleur (18), avec laquelle elle se trouve en contact thermique, et sachant que ladite conduite mène depuis cet endroit vers une zone en aval avant le dispositif de ruissellement d'un segment de refroidissement (11),
sachant qu'il convient de comprendre par côté chaud (20) de la pompe à chaleur (18) précisément le côté qui est prévu pour la dissipation de chaleur, et par côté froid (19), précisément le côté qui est prévu pour l'absorption de chaleur.

3. Dispositif de pasteurisation selon l'une quelconque des revendications 1 et 2, **caractérisé en ce**
**que** le segment (11 ) de la zone de refroidissement, relié par l'intermédiaire de la pompe à chaleur (18) et par l'intermédiaire de conduites appropriées est un segment qui est relié à un segment (7) de la zone de pasteurisation sans récupération.

4. Dispositif de pasteurisation selon l'une quelconque des revendications 1 et 2, **caractérisé en ce**
**que** le segment (11) de la zone de refroidissement relié par l'intermédiaire de la pompe à chaleur (18) est un segment qui est relié à un segment de la zone de pasteurisation avec récupération.

5. Dispositif de pasteurisation selon l'une quelconque des revendications 1 à 4, **caractérisé en ce**
**que** plus d'un segment de la zone de refroidissement sont reliés à un ou plusieurs segments de la zone de réchauffement par l'intermédiaire de la pompe à chaleur (18) et de conduites appropriées, sachant que lesdits segments de la zone de refroidissement sont des segments liés à récupération.

6. Dispositif de pasteurisation selon l'une quelconque des revendications 1 à 4, **caractérisé en ce**
**que** plus d'un segment de la zone de refroidissement sont reliés à un ou plusieurs segments de la zone de réchauffement par l'intermédiaire de la pompe à chaleur (18) et de conduites appropriées, sachant que lesdits segments sont des segments froids sans liaison à récupération.

7. Procédé de pasteurisation de milieux liquides au moyen d'un procédé, dans le cadre duquel un dispositif de pasteurisation (1) selon l'une quelconque des revendications précédentes est utilisé.

8. Procédé selon la revendication 7, **caractérisé en ce que**
le liquide en provenance de l'échangeur de chaleur (17) et s'écoulant en direction d'un segment de pasteurisation (7) présente au maximum la température de consigne du liquide de ruissellement de chaque segment respectif.

9. Procédé selon la revendication 8, **caractérisé en ce que** le liquide en provenance de l'échangeur de chaleur (17) et s'écoulant en direction d'un segment de pasteurisation, présente une température comprise entre 5° et 15° en-dessous de ladite température de consigne.
